# EUROPÄISCHE PATENTANMELDUNG

(11) **EP 3 560 971 A1**
(43) Veröffentlichungstag der Anmeldung: **30.10.2019**
(21) Anmeldenummer: 19170565.6
(22) Anmeldetag: 23.04.2019
(51) Int. Cl.: C08G 18/48, C08G 18/79, C08G 18/20, C08G 18/32, B29C 70/50, C08J 5/24

(54) **ZWEIKOMPONENTIGE HYBRID-MATRIX-SYSTEM AUS POLYURETHANEN UND POLYMETHACRYLATEN ZUR HERSTELLUNG VON KURZFASERVERSTÄRKTEN HALBZEUGEN**

(30) Priorität: 27.04.2018 EP 18169724
(71) Anmelder: Evonik Degussa GmbH, 45128 Essen (DE)
(72) Erfinder: Tuncay, Zuhal, 44623 Herne (DE); Loesch, Holger, 44627 Herne (DE); Cron, Christina, 42555 Velbert (DE); Gollan, Elke, 44653 Herne (DE); Elmer, Lisa-Maria, 48145 Münster (DE)
(74) Vertreter: Evonik Patent Association

(57) **Zusammenfassung**

Die Erfindung betrifft ein neuartiges 2K-System und ein Verfahren unter Verwendung dieses 2K-Systems zur Herstellung von lagerstabilen Composite-Halbzeugen, insbesondere sheet molding compounds (SMC) und daraus hergestellte Formkörpern (Composite-Bauteilen). Das Verfahren dabei ist fünfstufig, wobei drei unterschiedliche Reaktivschritte, die zu aufeinander aufbauenden Härtegraden führen, vorliegen. Das 2K-System wird dabei nach bekannten Verfahren auf Fasermaterial, wie z.B. Carbonfasern, Glasfasern oder Polymerfasern aufgebracht bzw. mit Kurzfasern zusammengebracht, wobei eine erste Reaktion stattfindet. Darauf erfolgt eine thermische, über eine Redox-Initiierung oder mit Hilfe von Strahlen oder Plasmaanwendungen gestartete Polymerisation. Nach Polymerisation entstehen Thermoplaste bzw. thermoplastische Prepregs, die nachträglich noch verformt werden können. Enthaltene Polyole können abschließend mit bereits im System vorhandenen Uretdionen durch erhöhte Temperatur vernetzt werden. Auf diese Weise können formstabile Duroplaste bzw. vernetzte Composite-Bauteile erzeugt werden.

## Beschreibung

Die Erfindung betrifft ein neuartiges 2K-System und ein Verfahren unter Verwendung dieses 2K-Systems zur Herstellung von lagerstabilen Composite-Halbzeugen, insbesondere sheet molding compounds (SMC) und daraus hergestellte Formkörpern (Composite-Bauteilen). Das Verfahren dabei ist fünfstufig, wobei drei unterschiedliche Reaktivschritte, die zu aufeinander aufbauenden Härtegraden führen, vorliegen. Das 2K-System wird dabei nach bekannten Verfahren auf Fasermaterial, wie z.B. Carbonfasern, Glasfasern oder Polymerfasern aufgebracht bzw. mit Kurzfasern zusammengebracht, wobei eine erste Reaktion stattfindet. Darauf erfolgt eine thermische, über eine Redox-Initiierung oder mit Hilfe von Strahlen oder Plasmaanwendungen gestartete Polymerisation.
Nach Polymerisation entstehen Thermoplaste bzw. thermoplastische Faserverbund-Halbzeuge, so genannte Prepregs, die nachträglich noch verformt werden können. Enthaltene Polyole können abschließend mit bereits im System vorhandenen Uretdionen durch erhöhte Temperatur vernetzt werden. Auf diese Weise können formstabile Duroplaste bzw. vernetzte Composite-Bauteile erzeugt werden.

Faserverstärkte Materialien in Form von vorimprägnierten Halbzeugen, also Prepregs werden bereits in vielen industriellen Anwendungen wegen ihrer bequemen Handhabung und der erhöhten Effizienz bei der Verarbeitung im Vergleich zu der alternativen Flüssigimprägnierverfahren, auch wet-lay-up Technologie genannt, eingesetzt. Industrielle Anwender solcher Systeme verlangen neben schnelleren Zykluszeiten und höheren Lagerstabilitäten - auch bei Raumtemperatur - zusätzlich eine Möglichkeit, die Prepregs zuzuschneiden, ohne dass bei automatisiertem Zuschnitt und Lay-up der einzelnen Prepreg-Lagen die Schneidwerkzeuge mit der häufig klebrigen Matrixmaterial verunreinigt werden.

Eine weitere, an Bedeutung zunehmende Form der Composite-Materialien stellen die sheet molding compounds (SMC) dar. Diese unterscheiden sich von den zuvor diskutierten endlosfaserverstärkten Prepregs im Wesentlichen dadurch, dass sie Kurzfasern enthalten. Dadurch unterliegen SMC geringeren Kosten für die Fasern und damit insgesamt geringeren Herstellungskosten. Weiterhin weisen sie gegenüber Prepregs mit Endlosfasern zwar eine geringere mechanische Stabilität auf. Dafür ergibt sich jedoch bei Verwendung von SMC eine höhere Designfreiheit, insbesondere in Bezug auf die Variation von Materialdicken innerhalb eines einzelnen Werkstücks.
Bei der Herstellung von SMC wird ein Harz flüssig mit den Kurzfasern zusammengebracht und reift danach zu einer hochviskosen klebrigen Masse. Soll die Reifung bei Raumtemperatur erfolgen, funktioniert die SMC-Herstellung nur unter Verwendung von 2K-System mit definierter einer Topfzeit. Gemäß allgemein eingesetzter Technik wird in der Regel der primäre Viskositätsanstieg über eine Komplexbildung mit Magnesiumoxid erreicht. Diese anorganischen Zuschlagsstoffe haben jedoch nicht nur einen Einfluss auf die Optik des Produkts, sondern verändern auch die mechanischen Eigenschaften des Endproduktes.

Zur Herstellung von Composite Bauteilen können unterschiedliche Verfahren eingesetzt werden. Diese können sowohl ein- als auch zweistufig ausgestaltet sein. Bei den zweistufigen Verfahren wird in der Regel über Prepregs, Tapes oder SMC als Zwischenstufe gearbeitet. Dabei erfolgt zuerst die Imprägnierung eines Fasermaterials mit einem Matrixmatrial. Das so gebildete Halbzeug kann zwischengelagert und zu einem späteren Zeitpunkt verarbeitet werden.

Als vernetzende Matrix-Systeme werden typischerweise ungesättigte Polyester, Vinylester und Epoxy-Systeme eingesetzt. Dazu zählen im Weiteren auch Polyurethan-Harze, die wegen ihrer Zähigkeit, Schadenstoleranz und ihrer Festigkeit insbesondere zur Herstellung von Composite-Profilen über Pultrusionsverfahren eingesetzt werden. Als Nachteil dieser PU-basierten Systeme wird häufig die Toxizität der verwendeten Isocyanate genannt. Jedoch auch die Toxizität von Epoxy-Systemen und den dort verwendeten Härter-Komponenten ist als kritisch anzusehen. Dies gilt insbesondere für bekannte Sensibilisierungen und Allergien.

Prepregs und daraus hergestellte Composites auf der Basis von Epoxy-Systemen werden zum Beispiel in WO 98/50211, EP 309 221, EP 297 674, WO 89/04335 und US 4,377,657 beschrieben. Die daraus hergestellten Halbzeuge sind allerdings nicht lagerstabil, weshalb sie kühl gelagert werden müssen. In WO 2006/043019 wird ein Verfahren zur Herstellung von Prepregs auf der Basis von Epoxidharz-Polyurethanpulvern beschrieben. Des Weiteren sind Prepregs auf der Basis von pulverförmigen Thermoplasten als Matrix bekannt. Thermoplastische Materialien sind jedoch per se weniger stabil im Composite-Endprodukt.

Prepregs mit einer Matrix auf der Basis von 2-Komponenten-Polyurethanen (2-K-PUR) sind gleichfalls bekannt. Die Kategorie der 2-K-PUR umfasst im Wesentlichen die klassischen reaktiven Polyurethan-Harz-Systeme. Prinzipiell handelt es sich um ein System aus zwei getrennten Komponenten. Während der maßgebende Bestandteil der einen Komponente immer ein Polyisocyanat, wie z.B. polymere Methylendiphenyldiisocyanate (MDI) ist, sind dies bei der zweiten Komponente Polyole bzw. bei neueren Entwicklungen auch Amino- oder Amin-Polyol-Gemische. Beide Teile werden erst kurz vor der Verarbeitung miteinander vermischt. Danach erfolgt die chemische Aushärtung durch Polyaddition unter Bildung eines Netzwerkes aus Polyurethan bzw. Polyharnstoff. 2-Komponenten-Systeme haben nach dem Vermischen beider Bestandteile eine begrenzte Verarbeitungszeit (Standzeit, Potlife), da die einsetzende Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalysierung, Konzentration, Löslichkeit, Feuchtegehalt, NCO/OH-Verhältnis und Umgebungstemperatur sind die wichtigsten [siehe dazu: Lackharze, Stoye/Freitag, Hauser-Verlag 1996, Seiten 210/212]. Der Nachteil der Prepregs auf der Basis derartiger 2-K-PUR-Systeme ist, dass nur eine kurze Zeit zur Verarbeitung des Prepreg zu einem Composite zur Verfügung steht. Deshalb sind derartige Prepregs nicht über mehrere Stunden geschweige denn Tage lagerstabil und sind damit für die Halbzeug-Herstellung nicht geeignet.

Halbzeuge auf PU-Basis können hergestellt werden, in dem die reaktiven freien Isocyanat-Gruppen geblockt werden, wie beispielsweise in EP 2 411 454 und EP 2 411 439 beschrieben. Hier werden beispielsweise vorab aus intern blockierten Isocyanaten, so genannten Uretdion-Dimeren, und Diol Präpolymere synthetisiert, welche später in der Schmelze mit einem Polyol vermengt werden. Die Mischung ist lagerstabil und kann als 1K-System verarbeitet werden. Die Systeme können dabei auch Poly(meth)acrylate als Cobindemittel oder Polyolkomponente aufweisen.

Für eine einfachere Imprägnierung kann das Pulver, wie in EP 2 619 242 beschrieben, in einem Lösemittel gelöst werden, wobei die Viskosität drastisch sinkt und die Imprägnierung bei RT erfolgen kann. Hierbei soll allerdings das Lösemittel nach der Imprägnierung vollständig vom Halbzeug entfernt werden, was mit einem zusätzlichen Aufwand verbunden ist.
In EP 2 576 648 werden solche Zusammensetzungen durch ein Direktschmelzeimprägnierverfahren in das Fasermaterial verbracht. Nachteil dieser Systeme ist die hohe Schmelzviskosität bzw. die Verwendung von Lösungsmitteln, die zwischenzeitlich entfernt werden müssen, bzw. auch in toxikologischer Hinsicht Nachteile mit sich bringen können.

In EP 2 661 459 ist ein einkomponentiges Matrix-System beschrieben, in dem das Präpolymer anstatt in Lösemittel in (Meth)acrylat-Monomeren und OH- funktionellen (Meth)acrylatMonomeren gelöst ist. Die Monomere sorgen dafür, dass die Viskosität herabgesetzt wird. Allerdings müssen diese nach der Imprägnierung nicht entfernt werden, sondern reagieren durch die radikalische Polymerisation zu den Polymerketten, welches ein Teil des Endproduktes wird. Die Lösungsviskosität von solchen Systemen hängt unter anderem von der Art und von der Konzentration des verwendeten (Meth)acrylat-Monomers ab. Wird ein Monomer wie Methylmethacrylat (MMA) verwendet, kann eine geringe Viskosität durch niedrige Konzentration an MMA gewährleistet werden. Das Monomer MMA hat allerdings einen hohen Dampfdruck und verdampft bei RT sehr schnell, weshalb ein offenes Verfahren zur Halbzeug-Herstellung nicht möglich ist.

EP 2 970 606 offenbart die Kombination aus einem (Meth)acrylat-Reaktionsharz und einer blockierten Isocyanatkomponente. Dabei wird ein Fasermaterial mit dieser Zusammensetzung imprägniert und anschließend das Reaktionsharz mittels Strahlung ausgehärtet. Dieses Prepreg kann dann noch verformt werden, bevor die Isocyanatkomponente ausgehärtet wird. Nachteilig hat sich jedoch in diesem System erwiesen, dass die notwendige Schmelzviskosität für die Weiterverarbeitung der Prepregs bei den verlangten Vernetzungstemperaturen in der Regel sehr hoch ist. Dies hat zur Folge, dass sehr hohe Pressdrücke angesetzt werden müssen oder andernfalls die Qualität und mechanischen Eigenschaften des Composites nicht ausreichend sind.

Es besteht neben diesen Optimierungen der Prepreg-Technologie darüber hinaus aber ein großer Bedarf daran, auch die SMC-Technik deutlich zu verbessern. Daher besteht der große Bedarf an einem Polyurethan-basierten System, welches bei Raumtemperatur in einen Zustand mit höherer Viskosität, dem so genannten B-stage übergehen kann. So benötigt beispielsweise das für Prepregs optimierte System gemäß der EP 2 970 606 eine deutliche Energiezufuhr in Form von UV-Licht oder einer Temperaturerhöhung zum Starten der Polymerisation und damit der Viskositätserhöhung.

Die Aufgabe der vorliegenden Erfindung vor dem Hintergrund des Standes der Technik war es, eine neue Technologie zur Herstellung von SMC zur Verfügung zu stellen, die ein einfacheres Verfahren zur Herstellung von problemlos zu handhabenden und besonders einfach herzustellenden SMC-Systemen ermöglicht.

Insbesondere war es Aufgabe der vorliegenden Erfindung, ein verbessertes Verfahren zur Herstellung von SMC zur Verfügung zu stellen, bei welchem gegenüber dem Stand der Technik keine anorganischen Salze zugefügt werden müssen, so dass eine besser mechanische wie optische Qualität des SMC erzielt wird.

In Kombination damit bestand weiterhin die Aufgabe, ein Verfahren mit einer definiert einstellbaren Topfzeit bis zur Erreichung des B-Stage bei der SMC-Herstellung zu realisieren. Das bedeutet, dass die Zeit, innerhalb derer bei Raumtemperatur ein Zustand hoher Viskosität bei gleichzeitig noch klebriger Oberfläche erreicht wird, durch Modifikation der Zusammensetzung des Matrixrohmaterials einfach zu realisieren ist.

Weiterhin sind als Aufgabe Formteile mit einer besonders hohen Qualität und sehr guten mechanischen Eigenschaften als Folgeprodukt dieser SMC zu ermöglichen. Diese sollen besonders einfach und ohne besondere Investition in die dazu benötigten Werkzeuge herstellbar und zu verarbeiten sein. Dabei soll insbesondere die Sprödigkeit des Endproduktes minimiert und die Duktilität erhöht werden.

Weitere nicht explizit genannte Aufgaben können sich aus der folgenden Beschreibung, den Ansprüchen oder den Beispielen, sowie aus der Kombination dieser ergeben.

Gelöst werden die Aufgaben mittels eines neuartigen 2K-Systems, aufweisend eine Komponente A und eine Komponente B zur Herstellung von Composites. Dieses 2K-Systemm zeichnet sich insbesondere dadurch aus, dass die erste Komponente A ein Uretdion-Dimer mit 2 freien Isocyanatgruppen und mindestens ein (Meth)acrylat-Monomer aufweist. Gleichzeitig weist die zweite Komponente B mindestens ein Diol, mindestens ein Polyol mit durchschnittlich 2,1 bis 4 OH-Gruppen und einen Aktivator für eine Methacrylat-Polymerisation auf.

Bevorzugt liegt dabei das Massenverhältnis zwischen Komponente A und Komponente B zwischen 4 zu 1 und 1 zu 1.

Besonders bevorzugt besteht die Komponente A des 2K-Systems aus 10 bis 50 Gew% Alkyl(meth)acrylate, 40 bis 89,9 Gew% Uretdion-Dimer, 0 Gew% bis 40 Gew% Polyester und/oder Poly(meth)acrylate und 0,1 bis 20 Gew% Additiven, Stabilisatoren, Katalysatoren, Pigmenten und/oder Füllstoffen.

Die Komponente B des 2K-Systems besteht bevorzugt aus 25 bis 99,5 Gew% Diol und Polyol, 0,5 bis 5 Gew% eines Initiators als Aktivator und optional bis 20 Gew% Additiven, Stabilisatoren, Katalysatoren, Pigmenten und/oder Füllstoffen. Dabei liegt das molare Verhältnis von Diol zu Polyol zwischen 6 zu 2 und 3 zu 2,5. Weiterhin hat das Diol bevorzugt ein zahlenmittleres Molekulargewicht Mₙ zwischen 50 und 300 g/mol und das Polyol ein zahlenmittleres Molekulargewicht Mₙ zwischen 90 und 800 g/mol, sowie eine Hydroxyl-Zahl zwischen 150 und 900 mg KOH/g.

Bevorzugt liegt in dem gesamten 2K-System aus Komponenten A und B das Verhältnis von freien Isocyanatgruppen zu Uretdion-Gruppen zwischen 1,1 zu 1 und 1 zu 1,1. Weiterhin bevorzugt liegt das Verhältnis von freien Isocyanat-Gruppen zu Hydroxylgruppen zwischen 1,2 zu 2 und 1 zu 2,5.

Als besonders vorteilhaft hat es sich erwiesen, wenn das Verhältnis von Diol und Polyol zwischen 4 zu 1 und 2 zu 1,2, insbesondere zwischen 6 zu 2 und 3 zu 2,5 liegt.

Auch besonders vorteilhaft ist es, wenn es sich bei dem Polyol um ein Tetraol mit einer OH-Zahl zwischen 200 und 800 mg KOH/g und einem Molekulargewicht zwischen 200 und 400 g/mol oder um ein Triol mit einer OH-Zahl zwischen 200 und 800 mg KOH/g und einem Molekulargewicht zwischen 200 und 400 g/mol handelt. Auch Mischungen dieser spezifischen Ausführungen sind vorteilhaft.

Es finden somit potentiell drei unterschiedliche Reaktionen unabhängig voneinander statt. Werden die beiden Komponente A und B zusammen gebracht, reagieren die freien Isocyanat-Gruppen der Uretdion-Dimere mit den OH-Gruppen zu lagerstabilen thermoplastischen Präpolymeren. Die Polymerisation von (Meth)crylat-Monomeren kann dabei zeitgleich mittels Redox-Initiatoren in der Komponente B oder im Anschluss thermisch oder photochemisch durchgeführt werden. Nachdem die ersten zwei Reaktionen stattgefunden haben, befindet sich das System immer noch in einem thermoplastischen Zustand. Für die letzte Reaktion werden die Uretdion-Ringe durch Temperaturzufuhr gespalten und die entstehenden freien Isocyanat-Gruppen reagieren mit den Polyolen zu einem Netzwerk.

Der Vorteil dieses erfindungsgemäßen Systems liegt in der Herstellung eines verformbaren thermoplastischen Halbzeugs/Prepregs, das bei der Herstellung der Composite-Bauteile in einem weiteren Schritt duroplastisch vernetzt wird. Die Ausgangsformulierung ist flüssig und damit ohne Zugabe von Lösungsmitteln für die Imprägnierung von Fasermaterial geeignet. Die Halbzeuge sind lagerstabil bei Raumtemperatur. Die entstehenden Formteile verfügen über eine, im Vergleich zu anderen Polyurethansystemen, erhöhte Wärmeformbeständigkeit. Im Vergleich zu gängigen Epoxysystemen zeichnen sie sich durch eine höhere Flexibilität und Schlagzähigkeit aus. Zudem können derartige Matrices lichtstabil ausgelegt werden und damit für die Herstellung von Sichtcarbonteilen, ggf. ohne weitere Lackierung, verwendet werden.

Ein besonderer Vorteil der vorliegenden Erfindung ergibt sich wie folgt: durch die Verwendung der erfindungsgemäßen Zusammensetzung lässt sich die erste PU Reaktion zum Thermoplasten dezidiert und definiert einstellen. Dabei wird der so genannte B-Stage erreicht. Da erfindungsgemäß keine anorganischen Zuschlagsstoffe eingesetzt werden müssen, entfallen eine besondere Dosierung sowie eine Verschlechterung der Mechanik durch die anorganischen Zuschlagsstoffe oder Füllstoffe. Das B-Stage lässt sich im Anschluss entweder in einer Stufe mittels Polymerisation und PU Vernetzung zum Endbauteil aushärten. Alternativ kann man erst Polymerisieren und so eine nichtklebrige, vorgeformte, aber nicht ausgehärtete "Preform" erhalten werden. Der Vorteil ist, dass die Preform im Anschluss noch mit anderen Materialien in der Vernetzungsstufe, zum Beispiel bei einem Co-Molding, reagieren kann.

Insgesamt ergeben sich also gegenüber dem Stand der Technik mehr Freiheiten bei der Verfahrensdurchführung, eine höhere mechanische Stabilität des Endproduktes, bessere optische Eigenschaften desselben sowie ein insgesamt einfacheres Verfahren.

### Träger

Erfindungsgemäß werden mit dem 2K-System insbesondere so genannte sheet molding compounds (SMCs) hergestellt. Bei diesen werden Kurzfasern von z.B. 1 Zoll Länge als Fasermaterial eingesetzt. Diese können beispielsweise ausgestreut und anschließend imprägniert werden. Besser ist es jedoch das Matrixmaterial, z.B. als Film, auszulegen und vor oder während der Anfangshärtung mit den Kurzfasern zu bestreuen. Als Materialien für solche Kurfasern können grundsätzlich die gleichen Materialien zum Einsatz kommen, die auch für die zuvor beschriebenen textilen Langfasern verwendet werden. Zusätzlich können aber auch andere, nicht zu langen Fasern verarbeitbare Werkstoffe, wie z.B. Holzspäne, eingesetzt werden.

Besonders bevorzugt bestehen die faserförmigen Träger größtenteils aus Glas, Kohlenstoff, Kunststoffen, wie Polyamid (Aramid) oder Polyester, Naturfasern, oder mineralischen Fasermaterialien wie Basaltfasern oder keramische Fasern. Ganz besonders bevorzugt werden Glas- oder Kohlenstoff-Kurzfasern verwendet.

### Die Uretdion-Dimere

Bei den erfindungsgemäß eingesetzten Uretdion-Dimeren mit freien Isocyanat-Gruppen handelt es sich bevorzugt um Uretdion-Dimere, die aus Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI) hergestellt wurden.

Uretdiongruppen enthaltende Diiisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Diiisocyanaten eine breite Palette von Isocyanaten geeignet.

Bevorzugt sind die erfindungsgemäß eingesetzten Uretdion-Dimere aus beliebigen aliphatischen, cycloaliphatischen und/oder (cyclo)aliphatischen Di- und/oder Polyisocyanaten hergestellt. Erfindungsgemäß können beispielsweise Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) verwendet werden. Ganz besonders bevorzugt werden IPDI, HDI, TMDI und H₁₂MDI eingesetzt, wobei auch die Isocyanurate einsetzbar sind.

Darüber hinaus kann die Zusammensetzung optional 0,01 bis 5 Gew%, bevorzugt von 0,3 bis 2 Gew% mindestens eines Katalysators ausgewählt aus quarternären Ammoniumsalzen, bevorzugt Tetralkylammoniumsalze, und/oder quarternären Phosphoniumsalzen mit Halogenen, Hydroxiden, Alkoholaten oder organischen oder anorganischen Säureanionen als Gegenion, und 0,1 bis 5 Gew%, bevorzugt 0,3 bis 2 Gew% mindestens eines Co-Katalysators, ausgewählt aus entweder mindestens einem Epoxid und/oder mindestens einem Metallacetylacetonat und/oder quarternären Ammoniumacetylacetonat und/oder quarternären Phosphoniumacetylacetonat enthalten. Alle Mengenangaben zu den (Co-)Katalysatoren sind bezogen auf die Gesamtformulierung des Matrixmaterials.
Beispiele für Metallacetylacetonate sind Zinkacetylacetonat, Lithiumacetylacetonat und Zinnacetylacetonat, allein oder in Mischungen. Bevorzugt wird Zinkacetylacetonat eingesetzt.
Beispiele für quarternäre Ammoniumacetylacetonate oder quarternäre Phosphoniumacetylacetonate finden sich in DE 102010030234.1. Besonders bevorzugt werden Tetraethylammoniumacetylacetonat und Tetrabutylammoniumacetylacetonat eingesetzt. Selbstverständlich können auch Mischungen solcher Katalysatoren verwendet werden.

Beispiele für die Katalysatoren finden sich in DE 102010030234.1. Diese Katalysatoren können allein oder in Mischungen zugesetzt werden. Bevorzugt werden Tetraethylammoniumbenzoat und Tetrabutylammoniumhydroxid verwendet.

Als epoxidhaltige Co-Katalysatoren kommen dabei z.B. Glycidylether und Glycidylester, aliphatische Epoxide, Diglycidylether auf Basis Bisphenol A und Glycidylmethacrylate in Frage. Beispiele für solche Epoxide sind Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname KARDURA E10, Shell), 3,4-Epoxycyclohexylmethyl-3',4'-epoxycyclohexancarboxylat (ECC), Diglycidylether auf Basis Bisphenol A (Handelsname EPIKOTE 828, Shell) Ethylhexylglycidylether, Butylglycidylether, Pentaerythrittetraglycidylether, (Handelsname POLYPOX R 16, UPPC AG) sowie andere Polypoxtypen mit freien Epoxygruppen. Es können auch Mischungen eingesetzt werden. Bevorzugt werden ARALDIT PT 910 und 912 eingesetzt.

Besonders bevorzugt enthält die Komponente A mindestens einen Katalysator ausgewählt aus Dibutylzinndilaurat, Zinkoctoat, Bismuthneodecanoat, und/oder tertiäre Amine, bevorzugt 1,4-Diazabicylco[2.2.2.]octan, in Mengen von 0,001 bis 1,0 Gew%.

### (Meth)acrylate

Erfindungsgemäß werden Monomerkomponenten auf (Meth)acrylatbasis verwendet. Die Schreibweise (Meth)acrylate umfasst dabei sowohl Methacrylate als auch Acrylate, sowie Mischungen aus Methacrylaten und Acrylate. Die eingesetzten (Meth)acrylate weisen keine OH-Gruppe bzw. keine mit einer OH-Gruppe substituierte Alkylgruppe auf.

Bevorzugt handelt es sich bei dem optionalen, d.h. bei einer thermischen Initiierung eingesetzten Aktivator um einen Peroxid-Initiator. Die Aktivatoren, insbesondere Photoinitiatoren, Peroxide und/oder Azoinitiatoren sind für den Fall, dass diese zugesetzt werden, in einer Konzentration zwischen 0,1 und 5,0 Gew%, bevorzugt zwischen 0,5 und 4 Gew% und besonders bevorzugt 2 bis 3 Gew% in der Komponente B enthalten.

Photoinitiatoren und ihre Herstellung werden beschrieben z. B. in "Radiation Curing in Polymer Science & Technology, Vol II: Photoinitiating Systems" von J. P. Fouassier, J. F. Rabek , Elsevier Applied Science, London und New York, 1993. Häufig handelt es sich hierbei um α-Hydroxyketone bzw. Derivate dieser oder Phosphine. Die Photoinitiatoren können, falls vorhanden, in Mengen von 0,2 bis 10 Gew.-% enthalten sein. Als Photoinitiatoren kommen beispielsweise in Frage Basf-CGI-725 (BASF), Chivacure 300 (Chitec), Irgacure PAG 121 (BASF), Irgacure PAG 103 (BASF), Chivacure 534 (Chitec), H-Nu 470 (Spectra Group limited), TPO (BASF), Irgacure 651 (BASF), Irgacure 819 (BASF), Irgacure 500 (BASF), Irgacure 127 (BASF), Irgacure 184 (BASF), Duracure 1173 (BASF).

Bei den Monomeren handelt es sich insbesondere um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat (MMA), Ethyl(meth)acrylat, n-Butyl(meth)acrylat oder 2-Ethylhexyl(meth)acrylat. Besonders bevorzugt handelt es sich bei den (Meth)acrylatMonomeren um MMA, n-Butyl(meth)acrylat, iso-Butyl(meth)acrylat oder Mischungen aus diesen Monomeren. Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole.

Im Einzelnen wird die Zusammensetzung der Monomere nach Anteil und Zusammensetzung zweckmäßigerweise im Hinblick auf die gewünschte technische Funktion und das zu benetzende Trägermaterial gewählt werden.

Die Komponente A kann neben den aufgeführten Monomeren auch Polymere enthalten, zur besseren Unterscheidbarkeit im Rahmen dieses Schutzrechtes als Präpolymer bezeichnet, bevorzugt Polyester oder Poly(meth)acrylate. Diese werden zur Verbesserung der Polymerisationseigenschaften, der mechanischen Eigenschaften, der Haftung zum Trägermaterial, der Viskositätseinstellung bei der Verarbeitung bzw. Benetzung des Trägermaterials mit dem Harz, sowie der optischen Eigenschaften der Harze eingesetzt.

Wenn solche Präpolymere verwendet werden, liegt deren Anteil an Komponente A dabei zwischen 0 Gew% und 40 Gew%, bevorzugt zwischen 15 Gew% und 30 Gew%.

Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.
Besagte Polyester werden in Substanz via Polykondensation oder ringöffnende Polymerisation gewonnen und setzen sich aus den für diese Anwendungen bekannten Bausteinen zusammen.

Als Regler können alle aus der radikalischen Polymerisation bekannten Verbindungen verwendet werden. Bevorzugt werden Mercaptane wie n-Dodecylmercaptan eingesetzt.

### Diole

Als Diole können beispielsweise niedermolekulare Verbindungen wie Ethylenglycol, Propylenglycol oder Butandiol eingesetzt werden. Darüber hinaus können aber auch oligomere oder kurzkettige polymere Diole Verwendung finden. Beispiele dazu wären Polyether, Polyurethane, Polyamide oder Polyester mit zwei Hydroxyendgruppen, wie auch Telechele, beispielsweise Polyolefin- oder Poly(meth)acrylat-Telechele mit zwei Hydroxygruppen. Bevorzugt werden niedermolekulare Diole, insbesondere Ethylenglycol oder Propylenglycol eingesetzt.

### Polyole

Die erfindungsgemäß eingesetzten Polyole weisen zwischen 2,1 und 4, bevorzugt zwischen 2,1 und 2,5 OH-Gruppen auf.

Ein besonderer Vorteil der erfindungsgemäßen Zugabe der Polyole besteht in einer insgesamt besseren Verarbeitbarkeit, bei dem Verpressen mehrerer Lagen Prepregs eine bessere Verbindung dieser Lagen zueinander und eine bessere Homogenisierung des Matrixmaterials über das gesamte Formteil.

Erfindungsgemäß enthält die Zusammensetzung Polyole, die mit den Isocyanatkomponenten gleichfalls eine Vernetzungsreaktion eingehen, als OH-funktionelle Cobindemittel. Durch Zusatz dieser Polyole, die in Verfahrensschritten II und IV, nicht jedoch in Verfahrensschritt III reaktiv sind, werden die Rheologie und damit die Verarbeitung der Halbzeuge aus Verfahrensschritt III, sowie der Endprodukte genauer eingestellt. So wirken die noch freien Diole und Polyole beispielsweise im Halbzeug aus Verfahrensschritt III als Weichmacher bzw. genauer als Reaktivverdünner.

Als OH-funktionelle Cobindemittel eignen sich grundsätzlich alle in der PU-Chemie üblicherweise eingesetzten Polyole, solange deren OH-Funktionalität im oben angegebenen Bereich liegt. Unter der Funktionalität einer Polyolverbindung versteht man die Anzahl der zur Reaktion befähigten OH-Gruppen des Moleküls. Für den Verwendungszweck ist es notwendig, Polyolverbindungen einzusetzen, die eine OH-Funktionalität von mindestens 2,1 aufweisen, um bei der Reaktion mit den Isocyanatgruppen der Uretdione ein dreidimensionales dichtes Polymernetzwerk aufzubauen. Selbstverständlich können dabei auch Mischungen verschiedener Polyole eingesetzt werden.

Ein einfaches geeignetes Polyol ist z.B. Glycerin. Andere niedermolekulare Polyole werden beispielsweise von der Firma Perstorp® unter den Produktnamen Polyol®, Polyol® R oder Capa®, von der Firma Dow Chemicals unter den Produktnamen Voranol® RA, Voranol® RN, Voranol® RH oder Voranol® CP, von der Firma BASF unter dem Namen Lupranol® und von der Firma DuPont unter dem Namen Terathane® vertrieben. Spezifische Produkte unter Angabe der Hydroxylzahlen und der Molmassen können beispielsweise in der deutschen Patentanmeldung mit dem Prioritätsaktenzeichen 102014208415.6 nachgelesen werden.

### Weitere Bestandteile der 2K-Systeme bzw. der daraus hergestellten Prepregs oder Composites

Zusätzlich zu den (Meth)acrylaten, den Uretdion-Dimeren, den Polyolen, den Diolen und dem Aktivator können die erfindungsgemäßen 2K-Systeme noch weitere Zusatzstoffe aufweisen. Dabei kann es sich insbesondere um Additive, Stabilisatoren, insbesondere UV-Stabilisatoren, Katalysatoren, Pigmente und/oder Füllstoffe handeln.

Als Hilfs- und Zusatzstoffe können zusätzlich auch Regler, Weichmacher und/oder Inhibitoren eingesetzt werden. Darüber hinaus können Farbstoffe, Netz-, Dispergier- und Verlaufshilfsmittel, wie z.B. Polysilicone, Haftvermittler, wie z.B. auf Acrylatbasis, Entschäumer und Rheologieadditive zugesetzt werden.

So können beispielsweise Lichtschutzmittel wie z.B. sterisch gehinderte Amine, oder andere Hilfsmittel, wie sie z. B. in EP 669 353 beschrieben wurden, in einer Gesamtmenge von 0,05 bis 5 Gew% zugesetzt werden. Füllstoffe und Pigmente wie z. B. Titandioxid können in einer Menge von bis zu 20 Gew% der Komponente A zugesetzt werden.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.
Aus der Gruppe der Stabilisatoren bzw. Inhibitoren werden vorzugsweise substituierte Phenole, Hydrochinonderivate, Phosphine und Phosphite eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10 - 700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

### Das erfindungsgemäße Verfahren

Gelöst werden die Aufgaben zusätzlich zu dem genannten erfindungsgemäßen 2K-System auch durch ein neuartiges Verfahren zur Herstellung von Composite-Halbzeugen bzw. Prepregs und deren Weiterverarbeitung zu Formteilen, wobei das erfindungsgemäße 2K-System eingesetzt wird. Dieses neuartige Verfahren weist folgende Verfahrensschritte auf:
I. Herstellung einer reaktiven Zusammensetzung durch Mischen der Komponenten A und B, wie zuvor beschrieben,
II. direkte Imprägnierung eines faserförmigen Trägers mit der Zusammensetzung aus I oder Zusammenführen der reaktiven Zusammensetzung mit Kurzfasern,
III. Polymerisation der (Meth)acrylat-Monomere in der Zusammensetzung mittels thermischer Initiierung, Redox-Initiierung eines 2K-Systems, elektromagnetischer Strahlung, Elektronenstrahlung oder einem Plasma,
IV. Formgebung zum späteren Formteil und
V. Reaktion der Uretdiongruppen mit freien OH-Gruppen bei einer Temperatur zwischen 120 und 200 °C.

Erfindungsgemäß erfolgt dabei in Verfahrensschritt I und optional Verfahrensschritt II bei einer Temperatur zwischen 10 und 100 °C eine Reaktion zwischen den freien Isocyanatgruppen und den OH-Gruppen.

Bevorzugt ist insbesondere eine Ausführungsform, bei der die Reaktion zwischen den freien Isocyanaten und den Hydroxygruppen in Verfahrensschritt I und/oder II bei Raumtemperatur und Verfahrensschritt III danach bei einer Temperatur zwischen 60 und 150 °C erfolgen.

In Verfahrensschritt III wird die Polymerisation erfindungsgemäß bei einer Temperatur von bis zu 100 °C parallel zu den Verfahrensschritten I und/oder II oder nach Verfahrensschritt II bei einer Temperatur von bis zu 180 °C, jedoch unterhalb der Reaktionstemperatur in Verfahrensschritt V initiiert.

Bevorzugt wird die Reaktion zwischen den Uretdion-Gruppen und den Hydroxygruppen in Verfahrensschritt V entweder in Gegenwart eines Katalysators bei einer Temperatur zwischen 120 und 160 °C oder ohne Katalysator bei einer Temperatur zwischen 120 und 160 °C durchgeführt.

Verfahrensschritt II, die Imprägnierung, erfolgt durch Tränkung der Fasern, Gewebe oder Gelege mit der in Verfahrensschritt I hergestellten Formulierung. Bevorzugt erfolgt die Imprägnierung bei Raumtemperatur.

Verfahrensschritt III, die Aushärtung der Harzkomponente, erfolgt bevorzugt direkt nach Verfahrensschritt II. Das Aushärten erfolgt beispielsweise durch Bestrahlung mit elektromagnetischer Strahlung, bevorzugt UV-Strahlung, mit Elektronenstrahlung oder durch Anlegen eines Plasmafeldes. Alternativ kann auch eine thermische Initiierung oder eine Redox-Initiierung, unter jeweiligem Vorliegen entsprechender Aktivatoren, bzw. in diesem Fall Initiatoren / Initiatorsystemen erfolgen. Dabei ist darauf zu achten, dass die Temperatur unterhalb der für Verfahrensschritt V benötigten Aushärtetemperatur liegt.

In Verfahrensschritt IV können die so hergestellten Composite-Halbzeuge / Prepregs je nach Bedarf zu unterschiedlichen Formen kombiniert und zugeschnitten werden. Insbesondere werden zur Konsolidierung mehrerer Composite-Halbzeuge zu einem einzigen Composite und vor endgültiger Vernetzung des Matrixmaterials zur Matrix zugeschnitten, gegebenenfalls vernäht oder anderweitig fixiert.

In Verfahrensschritt V erfolgt die endgültige Aushärtung der Composite-Halbzeuge zu Formteilen, die duroplastisch vernetzt sind. Dies erfolgt durch eine thermische Aushärtung der Hydroxygruppen der Komponente B mit den Uretdiongruppen aus Komponente A.
Im Rahmen dieser Erfindung erfolgt dieser Vorgang der Herstellung der Composite-Bauteile aus den Prepregs je nach Aushärtungszeit bei Temperaturen von oberhalb 160 °C bei Einsatz von reaktiven Matrixmaterialien (Variante I), oder bei mit entsprechenden Katalysatoren versehenen hochreaktiven Matrixmaterialien (Variante II) bei Temperaturen von über 120 °C. Insbesondere wird die Aushärtung bei einer Temperatur zwischen 120 und 200 °C, besonders bevorzugt bei einer Temperatur zwischen 120 und 180 °C, insbesondere zwischen 130 und 140 °C durchgeführt. Die Zeit zur Aushärtung in Verfahrensschritt V liegt üblicherweise innerhalb von 5 bis 60 Minuten.

Bei der Aushärtung in Verfahrensschritt V können die Composite-Halbzeuge zusätzlich in einer geeigneten Form unter Druck und gegebenenfalls Anlegen von Vakuum verpresst werden.

Die erfindungsgemäß hergestellten Composite-Halbzeuge / Prepregs weisen nach Verfahrensschritt III bzw. IV eine sehr hohe Lagerstabilität bei Raumtemperatur auf. Diese beträgt je nach enthaltener reaktiver Polyurethanzusammensetzung mindestens einige Tage bei Raumtemperatur. In der Regel sind die Composite-Halbzeuge mehrere Wochen bei 40 °C und darunter, sowie bei Raumtemperatur auch mehrere Jahre lagerstabil. Die so hergestellten Prepregs sind nicht klebrig und daher sehr gut zu handhaben und weiter zu verarbeiten. Die erfindungsgemäß eingesetzten reaktiven oder hochreaktiven Polyurethanzusammensetzungen weisen demnach eine sehr gute Haftung und Verteilung auf dem faserförmigen Träger auf.

Insbesondere weist das erfindungsgemäße 2K-System folgende Vorteile gegenüber dem in der Anmeldung EP 2 661 459 beschriebenen Systemen auf:
- Die geringe Viskosität der Zusammensetzung vor Verfahrensschritt III kann auch mit im Vergleich niedrigeren (Meth)acrylat-Konzentrationen gewährleistet werden. Das Endprodukt wird durch die niedrigeren (Meth)acrylat-Anteile duktiler.
- Präpolymere können direkt durch in-situ Polymerisation auf der Faser hergestellt werden. Somit fällt ein Reaktionsschritt weg und die Herstellungskosten können dadurch herabgesetzt werden.
- Je nach Art der Polymerisation und des gewählten Initiators kann das Halbzeug aus Verfahrensschritt IV klebrig oder trocken gestaltet werden. Im Vergleich dazu sind in EP 2 661 459 nur trockene Halbzeuge zugänglich. Klebrige Halbzeuge eignen sich besser für die manuellen Verarbeitungsverfahren.

Weiterhin sind die erfindungsgemäß verwendbaren reaktiven 2K-Systeme und die daraus hergestellten Folgeprodukte umweltfreundlich, kostengünstig, weisen gute mechanische Eigenschaften auf, lassen sich einfach verarbeiten und zeichnen sich nach Härtung durch eine gute Wetterbeständigkeit wie durch ein ausgewogenes Verhältnis zwischen Härte und Flexibilität aus.

Außerdem konnte der Druck im Presswerkzeug gegenüber älteren Verfahren deutlich herabgesenkt werden, welches den Einsatz eines wesentlich kostengünstigeren Werkzeugs bzw. einer einfacheren Presse ermöglicht. Des Weiteren wurde bei den mechanischen Eigenschaften eine Verbesserung der interlaminaren Scherfestigkeit erreicht. Weiterhin weist ein erfindungsgemäßes Prepreg eine geringere Glasübergangstemperatur des Matrixmaterials auf. Damit wird eine bessere Flexibilität des trockenen Halbzeugs erreicht, was wiederum die weitere Verarbeitung erleichtert. Die thermische Stabilität des vernetzten Bauteils konnte allerdings, überraschend verglichen zum Stand der Technik eines Systems ohne Polyole, erhalten bleiben.

### Die Aushärtung in Verfahrensschritt III

Wie ausgeführt gibt es verschiedene technische Möglichkeiten das Reaktionsharz, ohne Beteiligung der Polyole und der Isocyanatkomponente in Verfahrensschritt III auszuhärten.

In einer ersten Alternative erfolgt die Aushärtung thermisch. Dazu sind dem Reaktionsharz Peroxide und/oder Azoinitiatoren als Aktivatoren zugemischt, die unter Erhöhung der Temperatur auf eine für den jeweiligen Initiator geeignete Zerfallstemperatur die Aushärtung der Harzkomponente initiieren. Solche Initiatoren und die dazugehörigen Zerfallstemperaturen sind dem Fachmann allgemein bekannt. Geeignete Initiierungstemperaturen für eine solche thermische Aushärtung liegen in dem beschriebenen Verfahren bevorzugt mindestens 20 °C oberhalb der Umgebungstemperatur und mindestens 10 °C unterhalb der Aushärtetemperatur in Verfahrensschritt V. So kann eine geeignete Initiierung beispielsweise zwischen 40 und 70 °C liegen. In der Regel wird eine Initiierungstemperatur für die thermische Initiierung zwischen 50 und 110 °C gewählt.

Eine Alternative zu einer thermischen Initiierung stellt eine so genannte Redox-Initiierung dar. Dabei wird ein 2K-Redoxsystem, bestehend aus einem Initiator, in der Regel einem Peroxid, bevorzugt Dilauroylperoxid und/oder Dibenzoylperoxid, in der ersten Komponente und einem Beschleuniger, in der Regel einem Amin, bevorzugt einem tertiären aromatischen Amin in einer zweiten Komponente durch Mischen der beiden Komponenten erzeugt. Durch das Mischen, welches in der Regel als letzter Schritt in Verfahrensschritt I. erfolgt, wird eine Initiierung bewirkt, die innerhalb eines offenen Fensters, in der Regel zwischen 10 und 40 min, eine Imprägnierung in Verfahrensschritt II. weiterhin ermöglicht. Entsprechend muss bei einer solchen, bei Raumtemperatur durchführbaren Initiierung Verfahrensschritt II. innerhalb dieses offenen Fensters nach Verfahrensschritt I. durchgeführt werden.

Die dritte Alternative stellt eine Photoinitiierung, z.B. mittels elektromagnetischer Strahlung (insbesondere UV-Strahlung), Elektronenstrahlung oder einem Plasma dar. UV-Härtung und UV-Lampen werden z. B. beschrieben in "Radiation Curing in Polymer Science & Technology, Vol I: Fundamentals and Methods" von J. P. Fouassier, J. F. Rabek, Elsevier Applied Science, London und New York, 1993, Chapter 8, Seiten 453 bis 503. Bevorzugt werden UV-Lampen, die wenig bis gar keine Wärmstrahlung aussenden, z.B. UV-LED-Lampen verwendet. Elektronenstrahlhärtung und -härter werden z. B. beschrieben in "Radiation Curing in Polymer Science & Technology, Vol I: Fundamentals and Methods" von J. P. Fouassier, J. F. Rabek , Elsevier Applied Science, London und New York, 1993, Chapter 4, Seiten 193 bis 225 und in Chapter 9, Seiten 503 bis 555. Werden Elektronenstrahlen zur Polymerisationsinitiierung verwendet, sind Photoinitiatoren nicht mehr notwendig.
Das gleiche gilt für Plasmaanwendungen. Plasmen werden häufig im Vakuum eingesetzt. Plasmapolymerisation von MMA wird Beispielsweise in den Arbeiten von C. W. Paul, A. T. Bell und D. S. Soong "Initiation of Methyl Methacrylate Polymerization by the Nonvolatile Products of a Methyl Methacrylate Plasma. 1. Polymerization Kinetics" (Macromolecules 1985, vol. 18, 11, 2312-2321) beschrieben. Hier wird ein solches Vakuumplasma eingesetzt.
Erfindungsgemäß wird bei dem vorliegenden Verfahren als Radikalquelle ein sogenanntes Atmosphärendruckplasma eingesetzt. Dazu können beispielsweise handelsübliche Plasmajets/Plasmabeams, wie sie z.B. die Firma Plasmatreat GmbH oder die Firma Diener GmbH anbieten, eingesetzt werden. Das Plasma arbeitet unter Atmosphärendruck und wird unter anderem in der Automobilindustrie zum Entfernen von Fetten oder anderen Verunreinigungen auf Oberflächen eingesetzt. Im Gegensatz zu dem in der Literatur beschriebenen Plasmaverfahren wird das Plasma erfindungsgemäß außerhalb der eigentlichen Reaktionszone (Polymerisation) erzeugt und mit hoher Strömungsgeschwindigkeit auf die Oberfläche der zu behandelnden Composites geblasen. Dabei entsteht eine Art "Plasmafackel".

Vorteil des Verfahrens ist, dass die eigentliche Plasmabildung nicht durch das Substrat beeinflusst wird, was zu einer hohen Prozesssicherheit führt. Die Plasmajets werden normalerweise mit Luft betrieben, so dass ein Sauerstoff/Stickstoff-Plasma entsteht. Bei den Plasmajets wird das Plasma durch eine elektrische Entladung im inneren der Düse erzeugt. Die Elektroden sind elektrisch getrennt. Es wird eine so hohe Spannung angelegt, bis ein Funken von einer Elektrode zur anderen übergeht. Es kommt zur Entladung. Dabei können unterschiedlich viele Entladungen pro Zeiteinheit eingestellt werden. Die Entladungen können durch Pulsen einer Gleichspannung erfolgen. Eine weitere Möglichkeit ist die Entladungen durch eine Wechselspannung zu erreichen.

Nach der Herstellung des Prepregs auf der Faser mit Hilfe von Strahlen oder Plasmen in Verfahrensschritt III des gleichsam erfindungsgemäßen Verfahrens kann dieses Produkt gestapelt und in Form gebracht werden.

Die erfindungsgemäß eingesetzten Polymerzusammensetzungen bieten einen sehr guten Verlauf bei geringer Viskosität und damit eine gute Imprägnierfähigkeit und im ausgehärteten Zustand eine ausgezeichnete Chemikalienbeständigkeit.

Die erfindungsgemäß hergestellten Composite-Halbzeuge aus Verfahrensschritten III oder IV sind weiterhin bei Raumtemperatur-Bedingungen sehr lagerstabil, in der Regel mehrere Wochen und sogar Monate. Sie können somit jederzeit zu Composite-Bauteilen weiterverarbeitet werden. Dies ist der wesentliche Unterschied zu den Systemen nach Stand der Technik, die reaktiv und nicht lagerstabil sind, da diese nach dem Aufbringen sofort beginnen z.B. zu Polyurethanen zu reagieren und somit zu vernetzen.

Danach können die lagerfähigen Composite-Halbzeuge zu einem späteren Zeitpunkt zu Composite-Bauteilen weiterverarbeitet werden. Durch Verwendung der erfindungsgemäßen Composite-Halbzeuge erfolgt eine sehr gute Imprägnierung des faserförmigen Trägers, dadurch bedingt, dass die flüssigen Harzkomponenten, enthaltend die Isocyanatkomponente, die Faser des Trägers sehr gut benetzen, wobei die zu einer beginnenden zweite Vernetzungsreaktion führen könnende thermische Belastung der Polymerzusammensetzung durch eine vorherige Homogenisierung der Polymerzusammensetzung vermieden wird, des weiteren fallen die Prozessschritte der Vermahlung und Siebung in einzelne Partikelgrößenfraktionen weg, sodass eine höhere Ausbeute an imprägniertem faserförmigen Träger erzielt werden kann.

Ein weiterer großer Vorteil der erfindungsgemäß hergestellten Composite-Halbzeuge ist, dass die hohen Temperaturen, wie sie beim Schmelzimprägnierverfahren oder bei der Ansinterung von pulverförmigen reaktiven Polyurethanzusammensetzungen zumindest kurzzeitig vonnöten sind, bei diesem erfindungsgemäßen Verfahren nicht zwingend erforderlich sind.

Gegenstand der Erfindung ist auch die Verwendung der Prepregs, insbesondere mit faserförmigen Trägern aus Glas-, Kohle- oder Aramid-Fasern oder in Form eines SMC. Gegenstand der Erfindung ist insbesondere auch die Verwendung der erfindungsgemäß hergestellten Prepregs, zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie oder Energieerzeugungsanlagen, z.B. für Rotorblätter bei Windkraftanlagen.

Gegenstand der Erfindung sind auch die aus den erfindungsgemäß hergestellten Composite-Halbzeuge bzw. Prepregs hergestellten Formteile bzw. Composite-Bauteile, aufgebaut aus mindestens einem faserförmigen Träger und einer Matrix gebildet aus dem final ausgehärteten 2K-System.

### Beispiele

Zuerst wurden Komponente A und B vorbereitet. Dazu wurden die Edukte mit Hilfe eines Schnellrührers 1h bei RT homogenisiert. Die genaueren Zusammensetzungen der beiden Komponenten sind den folgenden Tabellen zu entnehmen. Die Viskosität der Komponente A betrug 2,5 Pas und die der Komponente B 1 Pas, welche durch die Kegel-Platte Methode gemessen wurde. Die Zusammensetzung der Komponente A findet sich in Tab.1. die der Komponente B in Tab.2.

**Tabelle 1: Komponente A**

| | Lieferant | Einwaagen | bez. Auf Komp. A |
|---|---|---|---|
| Isophorondiisocyanat Dimer 17,5% NCO_{frei} +19,9% NCO latent | Evonik | 48,2g | 61,4 Gew.-% |
| IBOA | Evonik | 19,8g | 25,2% |
| IBOMA | Evonik | 9,9g | 12,6% |
| DBN | Sigma Aldrich | 0,5g | 0,64 |
| 4-Hydroxy Tempo | Sigma Aldrich | 0,05g | 0,064% |
| Summe | | | 100% |

**Tabelle 2: Komponente B**

| | Lieferant | Einwaagen | bez. Auf Komp. B |
|---|---|---|---|
| Ethylenglycol | Sigma Aldrich | 0,1mol; 6,2g | 28,7% |
| Lupranol 3504 | BASF | 0,076mol; 14,9g | 68,9% |
| Cumolhdyroperoxyd | United Initiators | 0,5g | 2,31% |
| DBTL | Sigma Aldrich | 0,027g | 0,125% |
| Summe | | | 100 % |

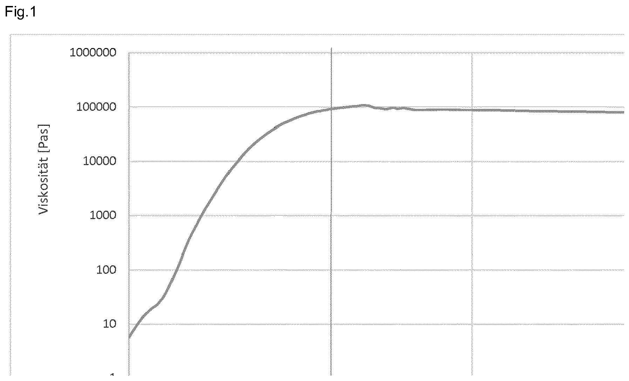

Die entstandenen dünnviskosen Komponenten wurden nun durch eine 2K-Pistole mit einem Statik-Mischer im Mischungsverhältnis von 2:1 (A:B) auf einer faserverstärkten Teflon-Folie appliziert, danach wurden kurze Fasern auf den beschichteten Folien manuell verteilt. Durch das Zusammendrücken des Aufbaus wurde die Mischung von der Folie auf die Fasern transferiert. Gleichzeitig startet die Reaktion zwischen den freien Isocyanat-Gruppen und den OH-Gruppen, wobei ein Viskositätsanstieg (siehe Fig.1) bei RT zu beobachten ist.

Die NCO_{frei}-Zahl wurde über die (Rück-)Titration der Reaktion eines Amins ((Di)-Butylamin) mit den Isocyanatgruppen mittels Salzsäure (HCl) bestimmt. Als Indikator wurde Bromphenolblau eingesetzt. Demnach war nach 6 Stunden bei RT keine freien NCO-Gruppen festzustellen bzw. war die Präpolymer-Bildung abgeschlossen. Durch die GPC-Analyse gegen Styrol Kalibrierung wurde gezeigt, dass die Präpolymere eine monomodale Verteilung (Mw 6000 g/mol und Mn 2700 g/mol) aufzeigen. Das entstandene Zwischenprodukt ist klebrig und bei RT 10 Tage stabil. Die Polymerisationsreaktion zwischen (Meth)acrylaten und die Vernetzung-Reaktion zu den Polyurethanen lassen sich innerhalb von 3 min bei 180°C realisieren. Das Endprodukt hat eine T_{g} von 125°C, welches mittels DSC-Messungen bestimmt wird.

### Erläuterung der Figuren

Fig. 1 stellt für Beispiel 1 die gemessene Viskositätszunahme der Matrixzusammensetzung nach Vermischen der Komponenten A und B gegenüber der Zeit dar.

## Patentansprüche

1. 2K-System zur Herstellung von Composites, **dadurch gekennzeichnet, dass** die erste Komponente A ein Uretdion-Dimer mit 2 freien Isocyanatgruppen und mindestens ein (Meth)acrylat-Monomer aufweist und die zweite Komponente B mindestens ein Diol, mindestens ein Polyol mit durchschnittlich 2,1 bis 4 OH-Gruppen und einen optionalen Aktivator für eine Methacrylat-Polymerisation aufweist, wobei
das (Meth)acrylat-Monomer der Komponente A keine OH-Gruppe bzw. keine mit einer OH-Gruppe substituierte Alkylgruppe aufweist; und
das Diol der Komponente B eine niedermolekulare Verbindung wie Ethylenglycol, Propylenglycol oder Butandiol; ein oligomeres oder kurzkettiges polymeres Diol wie ein Polyether, ein Polyurethan, ein Polyamid oder ein Polyester mit zwei Hydroxyendgruppen; oder ein Telechel wie ein Polyolefin- oder Poly(meth)acrylat-Telechel mit zwei Hydroxygruppen ist._{[MTR1]}

2. 2K-System gemäß Anspruch 1, **dadurch gekennzeichnet, dass** das Massenverhältnis zwischen Komponente A und Komponente B zwischen 4 zu 1 und 1 zu 1 liegt.

3. 2K-System gemäß Anspruch 1 oder 2, **dadurch gekennzeichnet, dass** Komponente A aus 10 bis 50 Gew% Alkyl(meth)acrylate, 40 bis 89,9 Gew% Uretdion-Dimer, 0 Gew% bis 40 Gew% Polyester und/oder Poly(meth)acrylate und 0,1 bis 20 Gew% Additiven, Stabilisatoren, Katalysatoren, Pigmenten und/oder Füllstoffen besteht.

4. 2K-System gemäß mindestens einem der Ansprüche 1 bis 3, **dadurch gekennzeichnet, dass** Komponente B aus 25 bis 99,5 Gew% aus Diol und Polyol, 0,5 bis 5 Gew% eines Initiators als Aktivator und optional bis 20 Gew% Additiven, Stabilisatoren, Katalysatoren, Pigmenten und/oder Füllstoffen besteht, wobei das molare Verhältnis von Diol zu Polyol zwischen 6 zu 2 und 3 zu 2,5 liegt, das Diol ein Molekulargewicht zwischen 50 und 300 g/mol und das Polyol ein Molekulargewicht zwischen 90 und 800 g/mol, sowie eine Hydroxyl-Zahl zwischen 150 und 900 mg KOH/g aufweist.

5. 2K-System gemäß mindestens einem der Ansprüche 1 bis 4, **dadurch gekennzeichnet, dass** in dem gesamten 2K-System aus Komponenten A und B das Verhältnis von freien Isocyanatgruppen zu Uretdion-Gruppen zwischen 1,1 zu 1 und 1 zu 1,1 liegt, und das Verhältnis von freien Isocyanat-Gruppen zu Hydroxylgruppen zwischen 1,2 zu 2 und 1 zu 2,5 liegt.

6. 2K-System gemäß mindestens einem der Ansprüche 1 bis 5, **dadurch gekennzeichnet, dass** das Verhältnis von Diol und Polyol zwischen 4 zu 1 und 2 zu 1,2 liegt, und dass es sich bei dem Polyol um ein Tetraol mit einer OH-Zahl zwischen 200 und 800 mg KOH/g und einem Molekulargewicht zwischen 200 und 400 g/mol handelt.

7. 2K-System gemäß mindestens einem der Ansprüche 1 bis 5, **dadurch gekennzeichnet, dass** das Verhältnis von Diol und Polyol zwischen 6 zu 2 und 3 zu 2,5 liegt, und dass es sich bei dem Polyol um ein Triol mit einer OH-Zahl zwischen 200 und 800 mg KOH/g und einem Molekulargewicht zwischen 200 und 400 g/mol handelt.

8. 2K-System gemäß mindestens einem der Ansprüche 1 bis 7, **dadurch gekennzeichnet, dass** die eingesetzten Uretdion-Dimere aus Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI) hergestellt wurden.

9. 2K-System gemäß mindestens einem der Ansprüche 1 bis 8, **dadurch gekennzeichnet, dass** die Komponente A 0,01 bis 5 Gew% mindestens eines Katalysators ausgewählt aus quarternären Ammoniumsalzen und/oder quarternären Phosphoniumsalzen mit Halogenen, Hydroxiden, Alkoholaten oder organischen oder anorganischen Säureanionen als Gegenion und optional 0,1 bis 5 Gew% mindestens einen Co-Katalysators, ausgewählt aus entweder mindestens einem Epoxid und/oder mindestens einem Metallacetylacetonat und/oder quarternären Ammoniumacetylacetonat und/oder quarternären Phosphoniumacetylacetonat enthält.

10. 2K-System gemäß mindestens einem der Ansprüche 1 bis 8, **dadurch gekennzeichnet, dass** es sich bei dem (Meth)acrylat-Monomer um MMA, n-Butyl(meth)acrylat, isoButyl(meth)acrylat oder Mischungen aus diesen Monomeren handelt, und dass es sich bei dem Aktivator um einen Peroxid-Initiator handelt.

11. Verfahren zur Herstellung von Composite-Halbzeugen und deren Weiterverarbeitung zu Formteilen, aufweisend folgende Verfahrensschritte
I. Herstellung einer reaktiven Zusammensetzung durch Mischen der Komponenten A und B gemäß mindestens einem der Ansprüche 1 bis 11,
II. direkte Imprägnierung eines faserförmigen Trägers mit der Zusammensetzung aus I. oder Zusammenführen der Zusammensetzung mit Kurzfasern,
III. Polymerisation der (Meth)acrylat-Monomere in der Zusammensetzung mittels thermischer Initiierung, Redox-Initiierung eines 2K-Systems, elektromagnetischer Strahlung, Elektronenstrahlung oder einem Plasma,
IV. Formgebung zum späteren Formteil und
V. Reaktion der Uretdiongruppen mit freien OH-Gruppen bei einer Temperatur zwischen 120 und 200 °C,
wobei in Verfahrensschritt I und optional Verfahrensschritt II bei einer Temperatur zwischen 10 und 100 °C eine Reaktion zwischen den freien Isocyanatgruppen und OH-Gruppen erfolgt, wobei Verfahrensschritt III bei einer Temperatur von bis zu 100 °C parallel zu den Verfahrensschritten I und/oder II oder bei einer Temperatur von bis zu 180 °C, jedoch unterhalb der Reaktionstemperatur in Verfahrensschritt V nach Verfahrensschritt II initiiert wird.

12. Verfahren gemäß Anspruch 11, **dadurch gekennzeichnet, dass** die faserförmigen Träger größtenteils aus Glas, Kohlenstoff, Kunststoffen, wie Polyamid (Aramid) oder Polyester, Naturfasern, oder mineralischen Fasermaterialien wie Basaltfasern oder keramische Fasern bestehen, und dass die faserförmigen Träger als textile Flächengebilde aus Vlies, Maschenware, Gewirke oder Gestricke, nicht maschige Gebinde wie Gewebe, Gelege oder Geflechte, als Langfaser- oder Kurzfasermaterialien vorliegen.

13. Verfahren nach Anspruch 11 oder 12, **dadurch gekennzeichnet, dass** die Reaktion zwischen den Uretdion-Gruppen und den Hydroxygruppen in Verfahrensschritt V entweder in Gegenwart eines Katalysators bei einer Temperatur zwischen 120 und 160 °C oder ohne Katalysator bei einer Temperatur zwischen 120 und 160 °C durchgeführt wird.

14. Formteile, hergestellt mit einem Verfahren gemäß mindestens einem der Ansprüche 11 bis 13.

15. Verwendung von Formteilen gemäß Anspruch 14 im Boots- und Schiffbau, in der Luft- und Raumfahrtechnik, im Automobilbau, für Zweiräder bevorzugt Motorräder und Fahrräder, in den Bereichen Automotive, Construction, Medizintechnik, Sport, Elektro- und Elektronik-Industrie, Energieerzeugungsanlagen, wie für Rotorblätter bei Windkraftanlagen.
